# EUROPEAN PATENT APPLICATION

(11) **EP 3 610 985 A1**
(43) Date of publication of application: **19.02.2020**
(21) Application number: 19191583.4
(22) Date of filing: 13.08.2019
(51) Int. Cl.: B24B 19/28, B24B 7/10, F16D 65/092, B25J 9/00, B23Q 7/04

(54) **MACHINE FOR GRINDING FRICTION PADS AND GRINDING METHOD**

(30) Priority: 17.08.2018 IT 201800008116
(71) Applicant: Bonetto S.r.l., 10064 Pinerolo (Torino) (IT)
(72) Inventor: SOLA, Claudio, I-10064 Pinerolo (TO) (IT)
(74) Representative: De Bonis, Paolo

(57) **Abstract**

Described herein is an automatic grinding machine (1) for friction pads (P), in particular brake pads for motor vehicles. The machine comprises a first manipulator (8) and a second manipulator (10), which carry out grinding according to a predetermined cycle, being guided in the grinding operation by a guide device (28).

## Description

### Field of the invention

The present invention relates to grinding of friction pads, such as brake pads for motor vehicles.

### Prior art

At the end of the process of production of friction pads such as brake pads for motor vehicles, the friction surfaces of the brake pads must be ground so that the friction surfaces will comply to planarity specifications provided for in the design stage, which are normally not respected by the product downstream of the sintering step (or in general the forming step).

Grinding is generally carried out with one or more rotary tools, such as grinding wheels either manually and in an automated way.

The above process, especially if carried out manually, is, however, subject to low repeatability since the result is markedly affected by the conditions of interference between the grinding wheel (or wheels) and the friction pad and also by the specific point of the grinding wheel where grinding is carried out.

Variations of interference due, for example, to vibrations or deformations of the manipulator at the moment of passage of the friction pad along the grinding wheel may give rise to a finished product with appreciable differences in thickness of the friction pad as compared to the design value, and moreover the variability of the grinding point may give rise to a non-uniform surface finish of the friction pad, with consequent difference in performance or simply in defectiveness between brake pads of different production lots.

Finally, grinding is a method that, in the prior art, involves relatively long execution times in proportion to the volumes of pieces machined, these times being generally incompatible with the requirements of a sector that is in fact characterised by large production volumes.

### Object of the invention

The object of the present invention is to solve the technical problems mentioned previously.

In particular, the object of the present invention is to provide a machine for grinding friction pads that will make it possible to grind the pads in a fast, repeatable and uniform way, as well as to provide a corresponding grinding method that possesses the above characteristics.

### Summary of the invention

The object of the present invention is achieved by a machine and a method that present the characteristics forming the subject of the appended claims, which form an integral part of the technical disclosure herein provided in relation to the invention.

### Brief description of the drawings

The invention will now be described with reference to the annexed figures, which are provided purely by way of non-limiting example and in which:
- Figure 1 is a top plan view of a machine according to a preferred embodiment of the invention;
- Figure 2 is a perspective view according to the arrow II of Figure 1;
- Figure 3 is a perspective view according to the arrow III of Figure 1; and
- Figure 4 is a perspective view from above according to the arrow IV of Figure 3.

### Detailed description

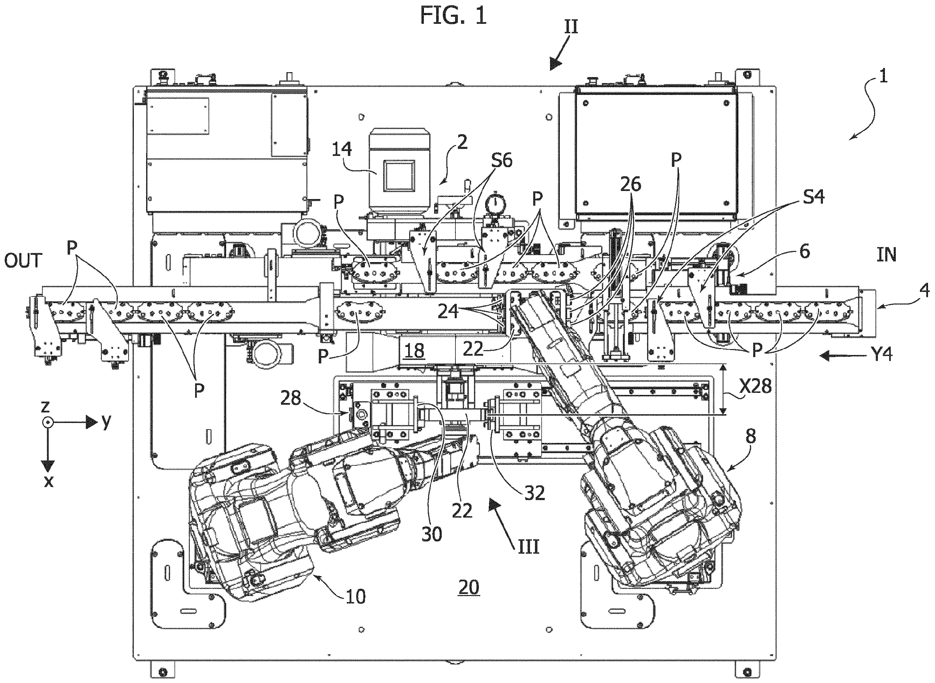

The reference number 1 in Figure 1 designates as a whole a machine for grinding friction pads according to a preferred embodiment of the invention. The machine 1 comprises a grinding device 2, one or more conveyors 4, 6 configured for transferring friction pads P from an inlet section IN of the machine to an outlet section OUT, and a first manipulator 8 and a second manipulator 10, each configured for operating between a picking position, a working position, and a release position.

In the preferred embodiment illustrated herein, the machine comprises a first conveyor 4 and a second conveyor 6, where the conveyor 4 is a primary conveyor of the machine, whereas the conveyor 6 is a secondary conveyor of the machine. Moreover, in the preferred embodiment illustrated herein, the manipulators 8, 10 are provided as multi-axis articulated industrial robots. For this reason, in the ensuing description regarding the embodiment represented in the figures, the term "robot/s" will at times be used instead of the term "manipulator device/s".

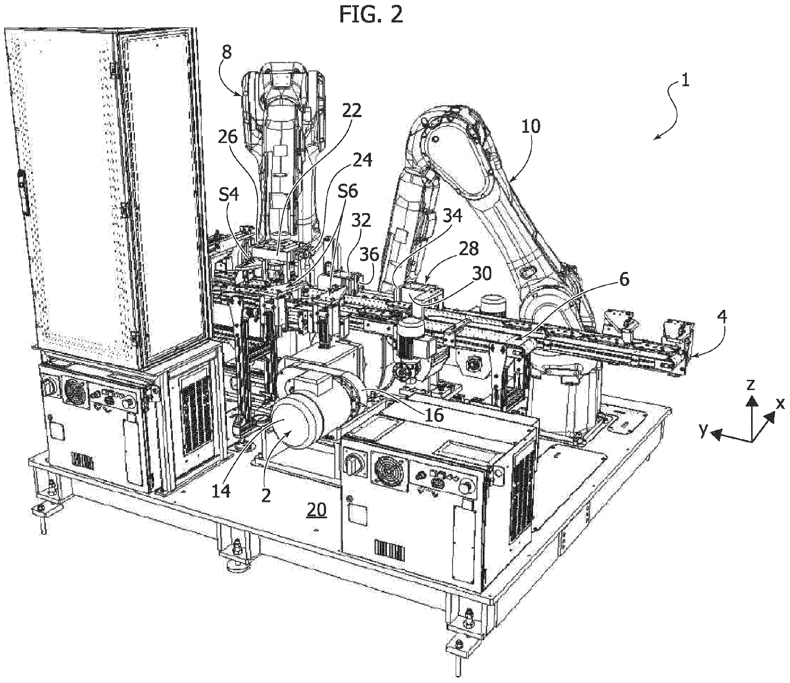

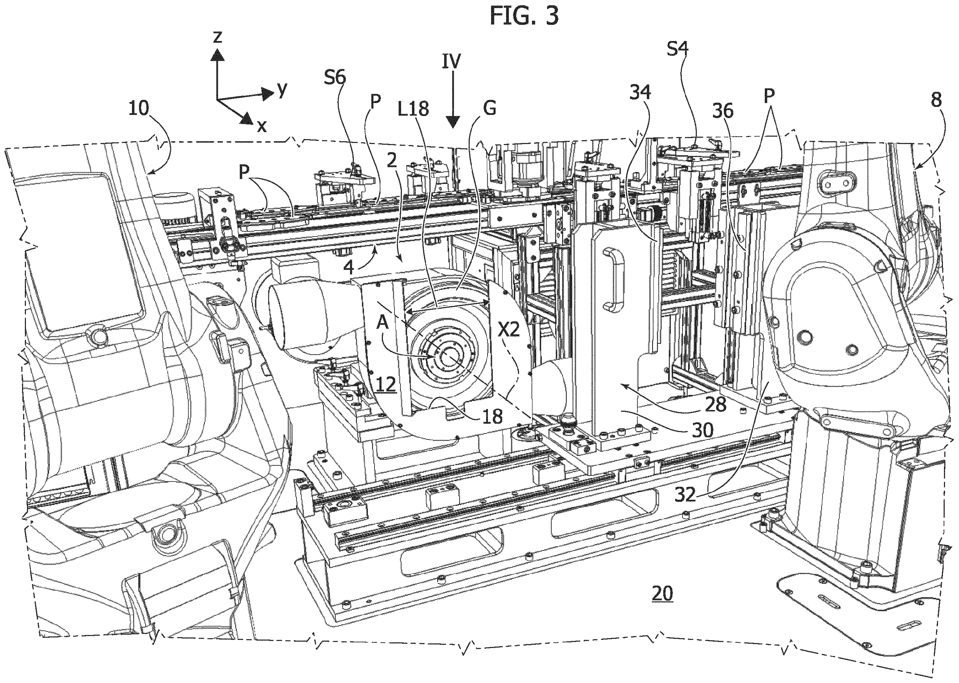

With reference to Figures 2 and 3, the grinding device 2 includes a rotary abrasive member, in particular a grinding wheel G rotatable about a horizontal axis X2, where the grinding wheel G is housed and rotatably mounted in a casing 12. The grinding wheel G is driven in rotation about the axis X2 by means of a motor unit 14, in particular an electric motor, possibly with interposition of a speed multiplier 16.

The casing 12 is shaped in such a way as to have a quadrangular opening 18 accessible by the manipulator devices/robots 8, 10, which extends straddling the axis X2 in a vertical direction (and orthogonally thereto) and moreover extends in a direction transverse to the axis X2 for a width L18. The opening 18 hence leaves exposed a grinding area A, i.e., an area in which the abrasive pads of the grinding wheel G are exposed and accessible by the robots 8, 10. In particular, the exposed abrasive pads of the grinding wheel G are located on a front ring having a surface shaped like an annulus, which extends in a radial direction with respect to the axis X2.

The entire grinding device 2 is fixed and installed on a machine base 20 of the machine, which also carries the supports of the conveyors 4, 6 and the two robots 8, 10.

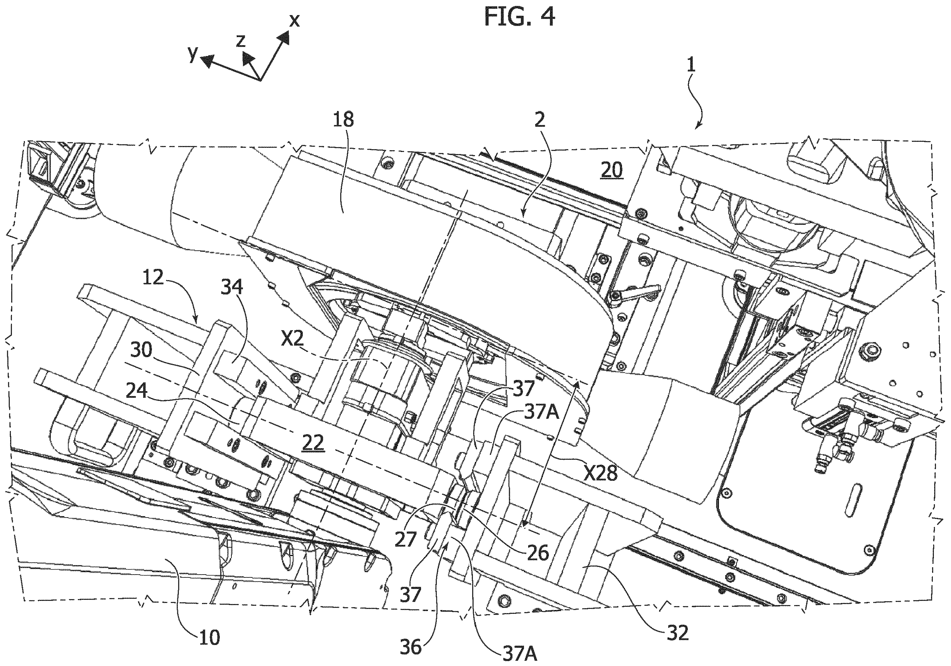

In the embodiment illustrated here, each of the robots 8, 10 is a six-axis robot including a gripping unit 22, which is configured for gripping and releasing the friction pads P. The gripping unit 22 is shaped as a rectangular frame with dimensions substantially comparable to those of the opening 18 and incorporates a gripper governed by the respective robot for gripping the pads P. Each gripping frame 22 bears, on opposite sides thereof, a first formation of rollers 24 and a second formation of rollers 26 mounted in a freely rotatable way. With reference to Figure 4, the rollers 24 preferably have a continuous cylindrical rolling surface, whereas the rollers 26 have a cylindrical rolling surface grooved by a circumferential troughs 27. Clearly, it is possible to envisage a reversed configuration, but it is preferable, for reasons that will be explained in detail in what follows, to provide one of the formations as is shown for the rollers 24, and the other of the formations as is shown for the rollers 26.

The gripping unit 22 and in particular the rollers 24, 26 are configured for co-operating with a guide device 28, which is installed on the base 20 in a position facing the grinding device 2, in particular in a position facing the opening 18.

The guide device 28 comprises a first lateral guide member 30 and a second lateral guide member 32, which rise vertically from the base 20 and each carry a respective guide profile 34, 36. Each of the guide profiles 34, 36 is configured for being engaged by the formations of rollers 24, 26 for guiding a linear movement of the gripping unit 22 in the vertical direction, and in particular a linear vertical movement with respect to the opening 18 and with respect to the abrasive member G of the grinding device 2.

In the light of what has been described, the guide profile 34 is configured for coupling to the rollers 24 and thus defines a guide with a pure C-shaped cross section. In this way, the contact surfaces between the rollers 24 and the profile 24 are smooth and are not able to give rise to constraining reactions in the transverse direction.

The profile 36 is, instead, configured for coupling to the rollers 26, and is thus obtained by means of a pair of blades 37 with a cross section configured for being accommodated in the circumferential trough 27 of the rollers 26. The blades 37 are preferably obtained on a matrix 37A of the profile 36 in order to facilitate replacement thereof.

The profile 36 is hence able to guide the rollers 26 along its own development and is likewise configured for exerting a transverse constraining reaction thanks to the coupling between the blades 27 and the rollers 26 so that the guide of the gripping frame 22 within the guide device 28 is obtained in a substantially statically determinate way, altogether to the advantage of reduction of wear of the wrist of the robots 8, 10, to which the gripping frame is constrained.

According to the shape of the profiles 34, 36, and clearly according to the requirements, it is in general possible to impose a predetermined trajectory on the gripping unit 22 when this come to engage the guide device 28 that is not necessarily rectilinear. In any case, in the preferred embodiment, the predetermined trajectory imposed is of a vertical and rectilinear type.

With reference to Figure 1, the conveyors 4, 6 are set between the robots 8, 10 and the motor unit 14 of the grinding unit 2; in particular, they overlie the grinding device 2, leaving, however, the casing 18 on the same side of the conveyors 4, 6 with respect to the manipulators 8, 10. In this way, proceeding along the axis X2, there are present, in order, the conveyors 6 and 4, the grinding device 2, the guide device 28, and the robots 8, 10.

The conveyor 4 is a primary conveyor of the machine 1 since it is configured for moving the friction pads P in the direction Y4 from the inlet section IN up to the outlet section OUT, whereas the conveyor 6 is a secondary conveyor in so far as it is configured for moving the friction pads P from the inlet station IN towards the outlet station OUT, without, however, reaching the latter, as will emerge more clearly from the ensuing description.

Set on the conveyor 4 is a first picking station S4, whilst set on the conveyor 6 is a second picking station S6. Each picking station is configured for automatic centering of a pad P as it arrives so as to slow it down momentarily and enable the robots 8, 10 to pick it up without them being forced to grope for it. Moreover, automatic centering of the friction pads P facilitates gripping by the robots 8, 10 in so far as the gripping point and gripping conditions are rendered as uniform and repeatable as possible.

There now follows a description of operation of the machine 1.

The machine 1 is configured for carrying out grinding of the friction pads P, in particular brake pads for motor vehicles, in an automated way, with high repeatability and at a high speed.

Each of the manipulators 8, 10 is configured for operating between a picking position, a working position, and a release position. In the picking position, each of the robots 8, 10 is configured for picking up a friction pad P that is to undergo grinding from one of the primary and secondary conveyors 4, 6. In particular, the robot 8 is configured for picking up friction pads P from the conveyor 4 (in the picking station S4), whereas the second robot 10 is configured for picking up friction pads P from the secondary conveyor 6 (in the picking station S6). The respective operating trajectories are set so that picking can be executed as described.

In the respective working positions, each of the robots 8, 10 is configured for processing the friction pad P that it has picked up in the picking position by means of the grinding device 2. This is obtained by engaging the gripping unit 22 to the guide device 28, and in particular by engaging the guide profiles 34, 36 to the formations of rollers 24, 26 and controlling movement thereof along the profiles 34, 36 themselves.

In the light of what has been described previously, the isostatic guide provided by the guide device 28 in regard to the gripping frames 22 minimises wear of the wrist of the robots 8, 10. In the direction X (longitudinal direction, coinciding with the axis X8) the stresses are largely transmitted to the profiles 34, 36, with practically negligible residual stresses on the wrist of the robot 8, 10 that carries the frame 22. In the vertical direction (Z), the stresses are very low since the movement in this direction is not a constrained degree of freedom during coupling of the frame 22 to the guide device 28, and the only residual stresses derive from the shear forces at the interface between the grinding wheel G and the braking pad that is being machined, whereas in the transverse direction (Y) the stresses are transmitted practically altogether to the profile 36 and to the rollers 26, thus relieving the load that weighs on the wrist of the robot.

The person skilled in the art will appreciate that, according to the trajectory imposed on the gripping unit 22 by the guide device 28, a repeatable and pre-set movement is obtained with respect to the grinding device 2, in particular with respect to the grinding wheel G, in the grinding area A.

Moreover, by setting a distance X28 (possibly adjustable) between the median plane defined by the profiles 34, 36 and the level of the abrasive surface of the grinding wheel G, it is possible to define in a repeatable way the depth of pass of each grinding operation, given that the condition of interference between the friction pad P and the abrasive surfaces of the grinding wheel G is determined mechanically.

Owing to the way the guide device 28 is built, in the working position each robot 8, 10 performs a double grinding stroke of the pads P. As may be seen from the figures, to be able to release the gripping unit 22 from the guide device 28 once it is engaged therein, it is necessary to negotiate a first vertical stroke where the gripping unit 22 is sent right into the guide device 28, and a second stroke where the gripping unit 22 is raised with respect to the guide device 28 given that entry and exit of the gripping unit 22 into/from the guide device 28 is always carried out from the top side of the guide device 28 itself.

Once these operations are carried out, each robot 8, 10 moves into a release position, where it is configured for releasing the ground friction pad P onto the conveyor 4.

In the light of what has been described above, since the secondary conveyor 6 is not configured in this embodiment to bring the friction pads P up to the outlet section OUT, both of the robots 8, 10 release the machined friction pad P on the conveyor 4 downstream of the first picking station S4. In particular, according to the position of the robots in the direction Y4 (robot 8 upstream, robot 10 downstream), the robot 8 is configured for depositing the machined pad P upstream of the point where the pad P machined by the robot 10 is released.

It will moreover be noted that the operations described are not carried out simultaneously for each of the robots 8, 10, in so far as, since there is just one guide device 28 and just one grinding device 2 for the whole machine 1, they are engaged by one robot 8, 10 at a time. The working cycles of the robots 8, 10 are hence temporally staggered so as to provide a condition of alternating engagement of the guide device 28 and of the grinding wheel G.

Each robot 8, 10 thus executes a working cycle that comprises:
- a first step of picking of a friction pad P from the respective picking station S4 (for the robot 8) or S6 (for the robot 10);
- a second step of processing, by means of the grinding device 2, of the friction pad P picked up from the picking station S4 or S6, where the second step further comprises engaging the gripping unit 22 within the guide device 28 and controlling a movement of the friction pad with respect to the abrasive member G of the grinding device 2 along a predetermined trajectory imposed by the guide device 28; in the light of what has been described, this step comprises execution of a double grinding stroke (downwards and upwards, or in general a forward stroke and a backward stroke), which results in a double grinding pass on the pad P; and
- a third step comprising release of the machined friction pad P onto the conveyor 4, which is the same for both of the robots 8, 10.

The degree of temporal staggering is generally equal to one step, so as to maximise the throughput of the machine 1 preventing any interference between the robots 8, 10: when the robot 8 executes the first working step, the robot 10 executes the third step of the previous cycle, and so forth.

The aforesaid staggering may be seen in Figure 1, with reference to the third and second steps: the manipulator robot 8, which is located upstream of the manipulator robot 10 in the direction Y4, is in the release position (third step), while the manipulator robot 10 is carrying out processing of the friction pad P on the grinding device 2 (second step).

The technical problems mentioned at the outset of the present description are hence solved basically for the reason that provision of the guide device 28 enables elimination of the problems of repeatability and production spread that afflict grinding operations in which the interaction between the grinding device and the friction pad P is, for example, imposed via just the non-guided action of a manipulator, whether this is a robot, a belt conveyor that passes under an array of grinding wheels, or some other kind of manipulator (including a human one).

Moreover, provision of a double manipulator (robots 8 and 10) and of a double conveyor with just one outlet point (the station OUT on the conveyor 4) enables increase of the throughput of the machine without any need for a dedicated interface for compensating the presence of two separate outlets. In other words, it is possible to integrate the machine 1 in a system for producing friction pads configured for operating with a single line without any need for further adaptations.

It is in any case possible to envisage embodiments in which, by maintaining two manipulators (once again, for example, the robots 8, 10) just one conveyor is used. This can be obtained by increasing the width of the band of the conveyor so as to provide the picking stations S4, S6 alongside one another (and possibly staggered in the direction of advance), albeit maintaining release of the pads along just one directrix (as if the conveyor were single) in order not to sacrifice the compatibility with other stations downstream of the machine 1. Alternatively, albeit with a slight penalisation in performance, the single conveyor may be made with a regular width of the band (like the conveyors 4, 6) with the first and the second picking stations S4, S6 coinciding. In this case, the trajectories of the robots 8, 10 are adapted so as to prevent interference on the single picking station (whence the possible worsening of the production rate).

Of course, the details of construction and the embodiments may vary widely with respect to what has been described and illustrated herein, without thereby departing from the scope of the present invention, as defined by the appended claims.

## Claims

1. A machine (1) for grinding friction pads (P), comprising:
- a grinding device (2) including an abrasive member (G);
- one or more conveyors (4, 6) configured for transferring friction pads (P) from an inlet section (IN) towards an outlet section (OUT) of the machine (1); and
- a first manipulator device (8) and a second manipulator device (10), each configured for operating between a picking position, a working position, and a release position,
wherein:
in the picking position each manipulator device (8, 10) is configured for picking a friction pad (P) to be ground from a conveyor (4, 6);
in the working position each manipulator device (8, 10) is configured for processing, by means of said grinding device (2), the friction pad (P) picked thereby;
in the release position, each manipulator device (8, 10) is configured for releasing the processed friction pad (P) onto a conveyor (4, 6); and
wherein the machine (1) further includes a guide device (28) configured for guiding the movement of the friction pad (P) relative to the abrasive member (G) of the grinding device (2) along a predetermined trajectory, said guide device (28) being engageable by each manipulator device (8, 10) in the respective working position.

2. The machine (1) according to Claim 1, wherein each manipulator device (8, 10) comprises a picking unit (22) configured for picking a friction pad (P) in the picking position of the manipulator device (8, 10) and for releasing the friction pad (P) in the release position of the manipulator device (8, 10), wherein said picking unit (22) is configured for engaging the guide device (28) in the working position of the manipulator device (8, 10).

3. The machine (1) according to Claim 1 or Claim 2, wherein said grinding device (2) comprises a rotary abrasive member, in particular a grinding wheel (G), and wherein said guide device (28) is positioned facing an abrasive surface of said rotary abrasive member,
said predetermined trajectory comprising a rectilinear trajectory parallel to said abrasive surface.

4. The machine (1) according to a Claim 2 or Claim 3, wherein said guide device (28) comprises a first lateral guide member (30) and a second lateral guide member (32), said first lateral guide member (30) and said second lateral guide member (32) being configured for receiving opposite sides of said picking unit (22) and for guiding said picking unit (22) along said predetermined trajectory.

5. The machine (1) according to Claim 4, wherein said gripping unit (22) comprises, on each of said opposite sides, a first formation of rollers (24) and a second formation of rollers (26), the rollers of each formation being configured for rolling through guide profiles (34, 36) carried by said first lateral guide member (30) and said second lateral guide member (32).

6. The machine (1) according to Claim 5, wherein:
- the rollers of said first formation (24) have a continuous cylindrical rolling surface;
- the rollers of said second formation (26) have a cylindrical rolling surface grooved by a circumferential trough (27);
- a first guide profile (34) carried by said first lateral guide member (30) is configured for coupling to the rollers of said first formation; and
- a second lateral guide profile (36) carried by said second lateral guide member (32) includes a pair of blades (37) configured for coupling to said circumferential trough (27).

7. The machine (1) according to Claim 1, wherein each manipulator device (8, 10) is a multi-axis articulated robot, particularly a six-axis robot, wherein each articulated robot (8, 10) is configured for alternatively engaging the guide device (28) in the respective working positions.

8. The machine (1) according to Claim 7, comprising a primary conveyor (4) and a secondary conveyor (6), wherein the primary conveyor (4) is configured for conveying friction pads (P) from an inlet section (IN) of the machine (1) to a first picking station (S4), and the secondary conveyor (6) is configured for conveying friction pads (P) from an inlet section (IN) of the machine (1) to a second picking station (S6); and
wherein:
- the picking position of said first articulated robot (8) corresponds to the first picking station (S4) on the primary conveyor (4);
- the picking position of said second articulated robot (10) corresponds to the second picking station (S6) on the secondary conveyor (6);
- the release position of said first articulated robot (8) is on said primary conveyor (4) downstream of said first picking station (S4), said primary conveyor (4) being configured for conveying the friction pads (P) to the outlet section (OUT) of said machine (1); and
- the release position of said second articulated robot (10) is on said primary conveyor (4) downstream of the first picking station (S4).

9. A method for grinding friction pads (P) by means of a grinding machine (1) according to Claim 8, the method comprising, for each articulated robot (8, 10):
- a first step of picking up a friction pad (P) from the respective picking station (S4, S6);
- a second step of processing, by means of the grinding device (2), of the friction pad (P) picked from the respective picking station (S4, S6), wherein the second step further comprises engaging the picking unit (22) into the guide device (28) and controlling a movement of the friction pad (P) with respect to the abrasive member (G) of the grinding device (2) along a predetermined trajectory set by the guide device (28); and
- a third step of release of the processed friction pad (P) onto the primary conveyor (4),
wherein said first step, second step, and third step are carried out by the first articulated robot (8) and by the second articulated robot (10) in a temporally staggered way.

10. The method according to Claim 9, wherein the second step comprises carrying out a double grinding stroke along the guide device (28).
